# EUROPEAN PATENT SPECIFICATION

(11) **EP 2 112 790 B1**
(45) Date of publication and mention of the grant of the patent: **15.06.2011**
(21) Application number: 08305115.1
(22) Date of filing: 22.04.2008
(51) Int. Cl.: H04L 12/56, H04Q 11/04, H04J 3/08

(54) **Method for mapping a protection scheme over a switching system**
Verfahren zum Abbilden eines Schutzschemas über ein Schaltsystem
Procédé de cartographie d'un schéma de protection sur un système de commutation

(43) Date of publication of application: 28.10.2009
(73) Proprietor: Alcatel Lucent, 75008 Paris (FR)
(72) Inventor: Gemelli, Riccardo, 20019, Settimo M.se (Milano) (IT); Badalucco, Giuseppe, 23035, Lissone (Milano) (IT); Ronchetti, Luigi, 22100, Como (IT); Cucchi, Silvio, 20083, Gaggiano (Milano) (IT); Frigerio, Silvano, 22063, Cantù (Como) (IT); Sestito, Vincenzo, 20127, Milano (IT); Costantini, Carlo, 22064 Casatenovo(Lecco) (IT); Jäkel, Hans-Jörg, 70439 Stuttgart (DE); Naumann, Ronald, 90542 Eckental (DE)
(74) Representative: Urlichs, Stefan

(56) References cited:
- EP-A- 1 120 989
- US-B1- 7 187 672
- US-B1- 7 272 309

## Description

### FIELD OF THE INVENTION

The present invention relates to the telecommunication field and more in particular to a method for protecting a plurality of inputs and a plurality of outputs. Still more in particular, the invention concerns a method for mapping a protection scheme over a switching system and the switching system thereof.

### BACKGROUND OF THE INVENTION

It is known that a network element includes a plurality of inputs for receiving user traffic and includes a plurality of outputs for transmitting user traffic. Preferably, the inputs are input ports of the network element and the outputs are output ports of the network element. Preferably, the inputs and outputs are adapted to carry user traffic according to Time Division Multiplexing (like SDH= Synchronous Digital Hierarchy, Sonet= Synchronous Optical Network, OTN= Optical Transport Network) or according to WDM (=Wavelength Division Multiplexing) or to carry the user traffic arranged into data packets (like Ethernet, ATM= Asynchronous Transfer Mode, IP= Internet Protocol, MPLS= Multi-Protocol Label Switching).

The network element further includes a switching system for performing the cross-connections between the plurality of inputs and the plurality of outputs according to configuration information.

It is also known to configure a protection scheme in the network element, wherein one input (or a plurality of inputs, indicated with "working inputs") is protected by another input (or a plurality of inputs, indicated with "protection inputs"). A protection input is activated in case of failure on the working input, wherein the term failure must be understood in the broader sense of the switch of user traffic from the working input to the protection input, that is failure means not only a local failure on the working input, but also a remote failure (for example, the working input receives a signal carrying an indication to switch the received traffic from the working to the protection input, because of a failure in the telecommunication network) or other events (for example, the network element receives a command from the network management system, the command indicating to switch the user traffic from a working input to a protection input).

Similar considerations apply to the outputs, wherein one (or more than one) working output is protected by another one (or more than one) protection output.

A protection input (or output) is configured in advance and this has the advantage that the time (indicated with recovering time) required for switching the traffic from the working to the protection input (or output) is small, but it has the disadvantage to require more resources of the network element, because the protection input (or output) cannot be used for carrying the user traffic (or can be used only for carrying low-priority user traffic, which must be dropped when it is required the activation of the protection input or output).

A known switching system is composed of multiple switching stages like the Clos architecture, which is composed of three stages and which has the advantage to require less cross-points than a single switching matrix. Depending on the number of switching matrices of the second stage and on the number of links (indicated with expansion factor) between the first stage and the second stage (and between the second and the third stage), the Clos architecture is re-arrangeably non-blocking for unicast cross-connections (that is, an unused input can always be connected to an unused output, but the configured cross-connections must be re-arranged by assigning them to different crossbar switches of the second stage) or strictly non-blocking (an unused input can always be connected to an unused output, without re-arranging the configured cross-connections); the first case will be indicated hereinafter as a Clos architecture with an expansion factor equal to 1, while in the second case with an expansion factor at least equal to 2.

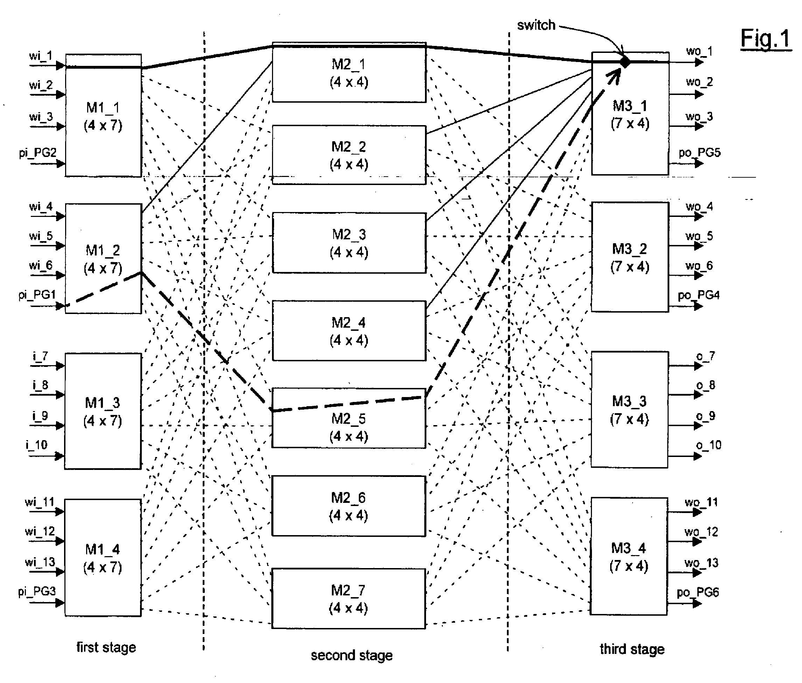

Referring to Fig.1, it shows schematically a 3 stages switching system according to the Clos architecture with expansion factor 2, wherein the first stage includes the switching matrices M1_1, M1_2, M1_3, M1_4, the second stage includes the switching matrices M2_1, M2_2, M2_3, M2_4, M2_5, M2_6, M2_7 and the third stage includes the switching matrices M3_1, M3_2, M3_3, M3_4.

Switching matrix M1_1 includes as inputs three working inputs wi_1,wi_2, wi_3, while switching matrix M1_2 includes as inputs three working inputs wi_4, wi_5, wi_6. Switching matrix M1 _1 further includes one protection input pi_PG2 for protecting a failure on one of the working inputs wi_4, wi_5, wi_6 and switching matrix M1_2 further includes one protection input pi_PG1 for protecting a failure on one of the working inputs wi_1, wi_2, wi_3. A protection input (for example, pi_PG1) is connected to a switching matrix (M1_2) different from the switching matrix (M1_1) connected to the working inputs (wi_1, wi_2,wi_3) protected by the protection input (pi_PG1), such that a failure does not affect both the working inputs and the protection input. Similar considerations apply to the switching matrices M3_1 and M3_2 of the third stage including working outputs (wo_1, wo_2, wo_3, wo_4, wo_5, wo_6) and protection outputs (po_PG5, po_PG4), wherein protection output po_PG4 protects the working outputs wo_1, wo_2, wo_3 and protection output po_PG5 protects the working outputs wo_4, wo_5, wo_6.

switching matrix M1_3 includes four inputs i_7, i_8, i_9, i_10 which are not protected. Switching matrix M3_3 includes four outputs o_7, o_8, o_9, o_10 which are not protected.

Switching matrix M1_4 includes as inputs 3 working inputs wi_11,t wi_12, wi_13 and one protection input pi_PG3 for protecting wi_11, wi_12, wi_13, but (more in general) the protection input pi_PG3 is connected to a matrix of the first stage different from M1_4. Similar considerations apply to the switching matrix M3_4 of the third stage including 3 working outputs (wo_11, wo_12, wo_13) and one protection output (po_PG6) for protecting wo_11, wo_12, wo_13.

Fig.1 shows the cross-connections required for protecting the working input wi_1 with the protection input pi_PG1, that is Fig.1 shows the cross-connection required between wi_1 and wo_1 (thick continuous line) and the cross-connection required between pi_PG1 and wo_1 (thick dashed line). Fig.1 shows that the cross-connection between wi_1 and wo_1 is performed crossing matrix M1_1 in the first stage, matrix M2_1 in the second stage and matrix M3_1 in the third stage. Fig.1 further shows that the cross-connection between pi_PG1 and wo_1 is performed crossing matrix M1_2 in the first stage, matrix M2_5 in the second stage and matrix M3_1 in the third stage. In fact, the links (indicated with a continuous thin line) between M1_2 and M2_1, M2_2 and M3_1, M2_3 and M3_1, M2_4 and M3_1 are not available because used by other configured cross-connections, while the link between M1_2 and M2_5 (thick dashed line) and the link between M2_5 and M3_1 (thick dashed line) are available. In order to perform the protection of the working input wi_1, a switch is provided in the switching matrix M3_1 of the third stage for selecting the link (indicated with a thick continuous line) between M2_1 and M3_1 or the link (indicated with a thick dashed line) between M2_5 and M3_1. Therefore two links are required between the second and the third stage, that is an expansion factor equal to 2 is required between the second stage and the third stage in order to perform a bi-cast cross-connection for protecting the working input wi_1 with the protection input pi_PG1.

This expansion equal to 2 between the second and the third stage required for bi-cast cross-connections can be avoided by re-arranging the existing cross-connections. In fact, the link between M1_2 and M2_1 is not available because it is used by another configured cross-connection, which can be moved to another link between the first and the second stage, so that the link between M1_2 and M2_1 can be used for carrying the cross-connection between pi_PG1 and wo_1: in this case, the switch can be performed in the matrix M2_1 of the second stage, so that only one link (between M2_1 and M3_1) is required between the second and the third stage. Anyway, the re-arrangement of the existing cross-connections must be avoided, because it requires a recovering time which is too high (typically, it is necessary to re-arrange more than one configured cross-connection) and because there is a failure of the traffic carried over the re-arranged cross-connections during the time required for the re-arrangement procedure.

More in general, it can be shown that even an expansion factor equal to 2 is not sufficient to perform two (or more) bi-cast cross-connections without re-arranging the configured cross-connections. Moreover, it is possible to configure complex protection schemes which require to perform multicast cross-connections greater than 2 and which require (if re-arranging must be avoided) an expansion factor greater than 2, for example in case of nested protection schemes (like the combination of SNCP=Sub-Network Connection Protection and MSP=Multiplex Section Protection in the SDH/SONET network) which would require an expansion factor equal to 4 or even greater.

Therefore the mapping of a protection scheme over a switching system requires to perform multicast cross-connections (multiple inputs which can be connected to one output or one input connected to multiple outputs) and the implementation of the multicast cross-connections of the protection scheme over a switching system according to the Clos architecture requires (if re-arranging is to be avoided) an expansion factor higher than 2, with the disadvantage to be expensive and not feasible. Alternatively, an expansion factor equal to 2 is possible, but it requires to re-arrange the existing connections, thus increasing the recovering time.

A system, where protection switching is performed at the interfaces to the switch matrix is described in EP 1 120 989 A1. This avoids the need to change connections in the switch matrix, since predetermined connections may be maintained regardless of which one of the inbound working and protection channels are selected to be provided to the switch matrix.

### SUMMARY OF THE INVENTION

In view of the drawbacks of the known solutions, the main object of the present invention is to provide a method for mapping a protection scheme over a multi-stage switching system and the switching system thereof. This object is achieved by a method according to claim 1 and by a switching system according to claim 7.

A basic idea is to identify the protection groups which are correlated to each other and to configure the switching matrices of the multi-stage switching system in such a way that all cross-connections of mutually correlated protection groups lead over a single center stage switching matrix having the capability to perform these cross-connections.

Advantages of the invention are a short recovering time and, in case of a switching system implemented with 3 stages, to require an expansion factor between the first and the second stage (and between the second and the third stage) smaller than 2, avoiding to re-arrange the configured cross-connections.

### BRIEF DESCRIPTION OF THE DRAWINGS

Preferred embodiments of the invention will be described below with reference to the accompanying drawings, in which:
Fig.1 schematically shows the mapping of a protection scheme over a switching system according to the Clos theorem;
Fig.2 schematically shows protection groups used in a first embodiment of the invention;
Fig.3 and Fig.4 logical dependency and correlation of the protection groups used in the first embodiment;
Fig. 5 schematically shows the architecture of the switch network according to the first embodiment of invention;
Figure 6 shows the configuration of cross-connections through the switch network of figure 5; and
Fig.7a and Fig.7b schematically show a second embodiment of invention using time-division multiplexing.

### DETAILED DESCRIPTION OF THE INVENTION

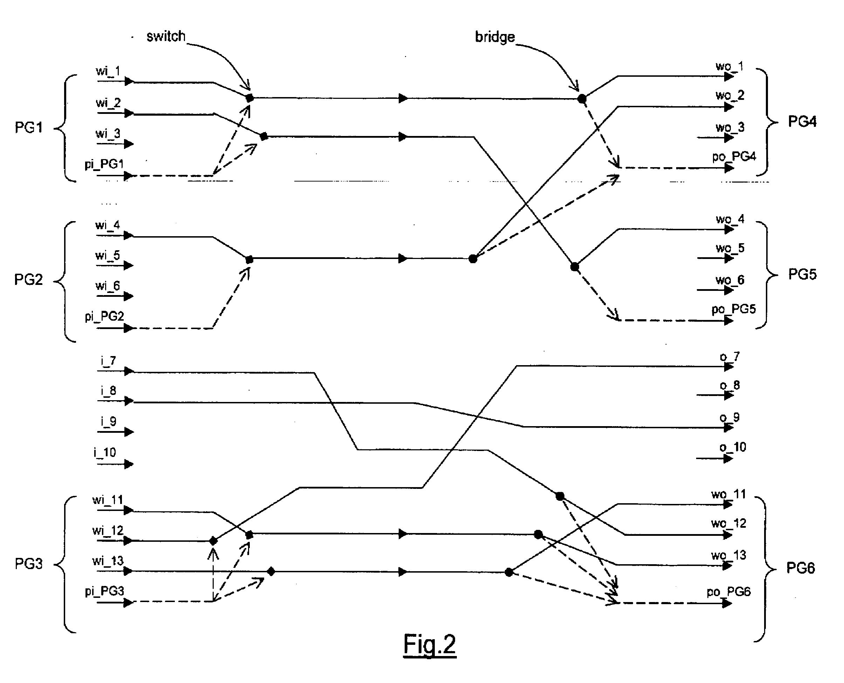

Referring to Fig.2, it shows several protection groups, each group including multiple working inputs/outputs and one protection input/output for protecting the multiple working inputs/outputs in case of failure on one of the multiple working inputs/outputs. More specifically:
- input protection group 1 is indicated with PG1 and includes three working inputs indicated with wi_1, wi_2, wi_3 and one protection input indicated with pi_PG1;
- input protection group 2 is indicated with PG2 and includes three working inputs indicated with wi_4, wi_5, wi_6 and one protection input indicated with pi_PG2;
- input protection group 3 is indicated with PG3 and includes three working inputs indicated with wi_11, wi_12, wi_13 and one protection input indicated with pi_PG3;
- output protection group 4 is indicated with PG4, and includes three worming outputs indicated with wo_1, wo_2, wo_3 and one protection output indicated with po_PG4;
- output protection group 5 is indicated with PG5 and includes three working outputs indicated with wo_4, wo_5, wo_6 and one protection output indicated with po_PG5;
- output protection group 6 is indicated with PG6 and includes three working outputs indicated with wo_11, wo_12, wo_13 and one protection output indicated with po_PG6.

Fig.2 further shows four inputs (i_7, i_8, i_9, i_10) which are not part of any input protection group. These inputs are hence not protected by any protection input. Moreover, the four outputs (o_7, o_8, o_9, o_10) are also not part of any output protection group and are hence not protected by any protection output.

Fig.1 and Fig.2 include equal names of the inputs/outputs for indicating that they refer to comparable inputs/outputs.

Fig.2 shows six equal protection groups, that is wherein each protection group includes the same number of working inputs/outputs and the same number of protection input(s)/output(s). It should be understood that this is an arbitrary configuration used for the purpose of explaining the invention and that any other configuration having different protection groups can equally be applied, for example wherein the number of working inputs/outputs and protection input(s)/output(s) is different. More in general, according to the present invention, configurations can be handled which have:
- one (or more) input protection group and one (or more) output protection group; or
- one (or more) input protection group and no output protection group; or
- one (or more) output protection group and no input protection group.

Fig.2 further shows the following cross-connections required between working inputs and working outputs, or between inputs and working outputs, or between working inputs and outputs or between inputs and outputs:
- wi_1 and wo_1;
- wi_2 and wo_4 ;
- wi_4 and wo_2;
- i_7 and wo_12;
- i_8 and o_9;
- wi_11 and wo_13;
- wi_12 and o_7;
- wi_13 and wo_11.

The protection of the working inputs is achieved through a selection of the signal carried over the corresponding inputs. In the case of a failure, the failed signal is received at the protection input and selected through a selector termed hereinafter "switch". In particular:
- referring to PG1, the selection is performed between wi_1 and pi_PG1, or between wi_2 and pi_PG1, or between wi_3 and pi_ PG1. Fig.1 shows for the sake of simplicity only the selection between wi_1 and pi_PG1 and between wi_2 and pi_PG1;
- referring to PG2, the selection is performed between wi_4 and pi_PG2, or between wi_5 and pi_PG2, or between wi_6 and pi_PG2. Fig.1 shows only the selection between wi_4 and pi_PG2;
- referring to PG3, the selection is performed between wi_11 and pi_PG3, or between wi_12 and pi_ PG3, or between wi_13 and pi_PG3.

The protection of the working outputs is achieved through a bridge of the signal to the corresponding outputs. This means that in the case of a failure at a protected output, the affected signal is bridged to the protection output. The bridge is shown again in Fig.2 with a dashed line and with a circle indicated with "bridge":
- referring to PG4, the signal received from wi_1 (or pi_PG1) is bridged to wo_1 and po_PG4, and the signal received from wi_4 (or pi_PG 2) is bridged to wo_2 and po_PG4;
- referring to PG5, the signal received from wi_2 (or pi_PG1) is bridged to wo_4 and po_PG5;
- referring to PG6, the signal received from wi_11 (or pi_PG3) is bridged to wo_13 and po_PG6, the signal received from wi_13 (or pi_PG3) is bridged to wo_11 and po_PG6, and the signal received from i_7 is bridged to wo_12 and po_PG6.

Switch and bridge connections together are also often referred to as multicast connections.

The invention is based on the recognition that a correlation can exist between various protection groups. A correlation exists, when a working input of a first protection group is cross-connected to a working output of a second protection group. In particular, correlations exist when:
- multiple working inputs of an input protection group are connected to multiple outputs. In other words; the input protection group is correlated to the multiple outputs;
- multiple inputs are connected to multiple working outputs of an output protection group. This means that the multiple inputs are correlated to the output protection group;
- multiple working inputs of an input protection group are connected to multiple working outputs of an output protection group. In this case, we say that the input protection group is correlated to the output protection group;
- multiple working inputs of multiple input protection groups are connected to multiple working outputs of an output protection group. In such case we say that the input protection groups are correlated to the output protection group;
- multiple working inputs of an input protection group are connected to multiple working outputs of multiple output protection groups. We say then than the input protection group is correlated to the output protection group;
- multiple working inputs of multiple input protection groups are connected to multiple working outputs of multiple output protection groups. We can hence say that the input protection groups are correlated to the output protection groups.

In the specific embodiment of Fig.2, which shows a plurality of input protections groups correlated to a plurality of output protection groups, wherein:
- wi_1 of PG1 is connected to wo_1 of PG4, thus PG1 is correlated to PG4;
- wi_2 of PG1 is connected to wo_4 of PG5, thus PG1 is also correlated to PG5;
- wi_4 of PG2 is connected to wo_2 of PG4, thus PG2 is correlated to PG4;
- wi_11 of PG3 is connected to wo_13 of PG6, thus PG3 is correlated to PG6;
- wi_13 of PG3 is connected to wo_11 of PG6, thus again PG3 is correlated to PG6.

Fig.2 further shows:
- i_7 is connected to wo_12, thus i_7 is correlated to PG6:
- wi_12 is connected to o_7, thus PG3 is correlated to o_7.

Therefore it is possible to identity:
- protection groups PG1 correlated to PG4 and PG5, and PG2 correlated to PG4: more in general, PG1, PG2, PG4, PG5 are correlated to each other;
- protection group PG3 correlated to PG6, i_7 correlated to PG6 and PG3 correlated to o_7: more in general, PG3, PG6, i_7, o_7 are correlated to each other.
PG1, PG2, PG4, PG5 are uncorrelated from PG3, PG6, i_7, o_7.

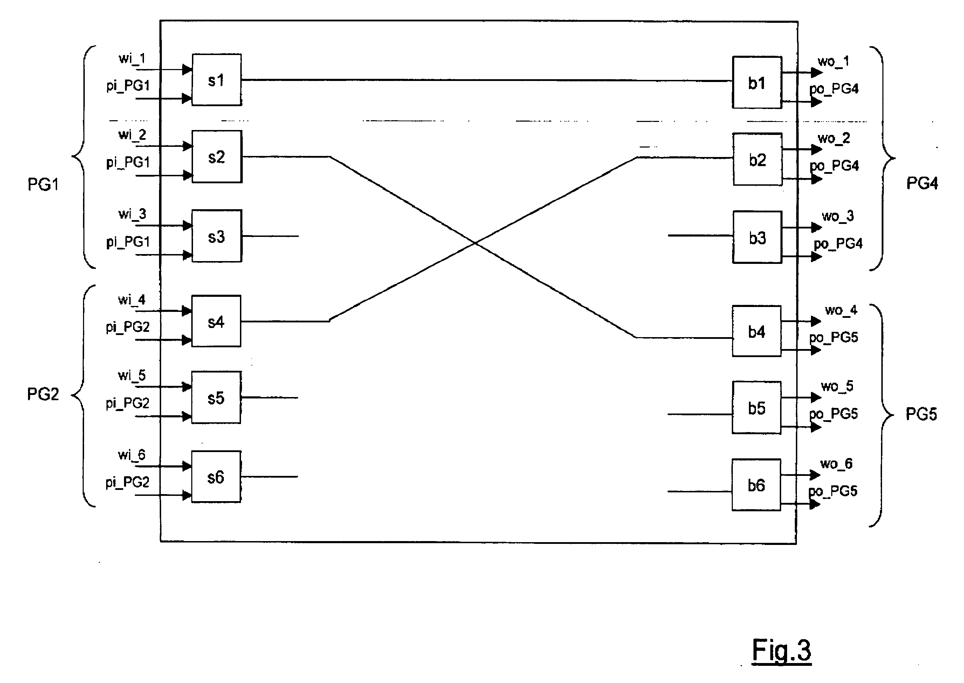

Referring to Fig.3, it shows a different logical representation of part of Fig.2. In this representation, the cross-connections required between the working and protection inputs and the working and protection outputs of the correlated protection groups PG1, PG2, PG4, PG5 can be identified.

More specifically, Fig.3 shows that PG1 is equivalent to a switch indicated with "s1" for performing the selection of signal from wi_1 or pi_PG 1, a switch "s2" for performing the selection from wi_2 or pi_PG 1 and a switch "s3" for performing the selection from wi_3 or pi_PG1; the total number of required inputs from PG1 is four, i.e. three working inputs wi_1, wi_2, wi_3 and one protection input pi_PG1. Similar considerations apply to PG2, which is equivalent to switches s4, s5, s6 and to a total number of required inputs from PG2 equal to four. Therefore the total number of inputs from PG1 and PG2 is 4+4=8.

Fig.3 further shows that PG4 is equivalent to a bridge indicated with "b1" for bridging the signal to wo_1 and po_PG4, a bridge "b2" for bridging the signal to wo_2 and po_PG4 and a bridge "b3" for bridging the signal to wo_3 and po_PG4; the total number of required outputs from PG4 is four. Similar considerations apply to PG5, which is equivalent to bridges, b4, b5, b6 and to a total number of required outputs from PG5 equal to four. Therefore the total number of outputs from PG4 and PG5 is 4+4=8.

As can be seen if fig.3, in total twelve cross-connections are required between the following input and outputs:
- wi_1, wo_1;
- wi_1, po_PG4;
- pi_PG 1, wo_1;
- pi_ PG 1, po_PG4;
- wi_2, wo_4;
- wi_2, po_PG5;
- pi_PG 1, wo_4;
- pi_PG 1, po_PG5;
- wi_4, wo_2;
- wi_4, po_PG4;
- pi_ PG 2, wo_2;
- pi_ PG 2, po_PG4.

Having recognized that protection groups can be and in practice generally are correlated, an idea, on which the present invention is based, is that all correlated protections groups will be routed over a same center stage matrix module.

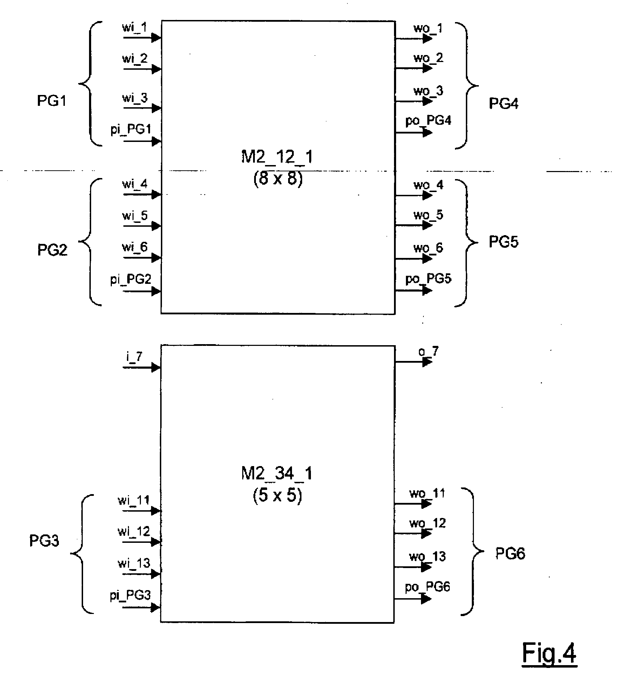

With this condition provided, any working or protection input of an input protection group can be connected to any working or protection output of a correlated output protection group. In the given example, it is required to perform the cross-connections between 8 inputs and 8 outputs. A center stage switching matrix capable of handling these inputs and outputs must hence have a cross-connection capacity of 8 x 8. This is shown by way of example in Fig. 4, wherein a single switching matrix (indicated with M2_12_1) is able to perform the cross-connections required between the working and protection inputs and the working and protection outputs of the protections groups PG1, PG2, PG4, PG5, which in this embodiment are correlated to each other. The switching matrix M2_12_1 is further capable to perform the multicast of the working inputs to the working and protection outputs of the protection groups PG1, PG2, PG4, PG5 correlated to each other and is able to perform the multicast of the protection inputs to the working and protection outputs of the protection groups PG1, PG2, PG4, PG5 correlated to each other.

The meaning of "single" referred to the switching matrix M2_12_1 must be understood as a logical entity capable of performing the above cross-connection functionalities between the working and protection inputs and the working and protection outputs. This logical building block can be physically implemented as a single integrated switching circuit or can be composed of a plurality of integrated switching circuits (switching chips).

Fig.4 further shows a second single switching matrix (indicated with M2_34_1) capable of performing the cross-connections required between input i_7, the working and protection inputs of PG3 and output o_7, the working and protection outputs of PG6. In this exemplary embodiment, the second switching matrix has a cross-connection capability of 5 x 5. M2_34_1 is a matrix distinct from matrix M2_12_1, because i_7, o_7, PG3, PG6 are uncorrelated respect to PG1, PG2, PG4, PG5. In other words, no cross-connections are required between any input or output of any of protections groups PG1, PG2, PG4, PG5 to any output or any input of any of correlated protection groups i_7, o_7, PG3, PG6.

In order to achieve a fast recovery time after a failure, a protection scheme is implemented over a switching system by allocating the cross-connections required between the input protection groups and the correlated outputs, or between the inputs and the correlated output protection groups, or between the input protection groups and the correlated output protection groups.

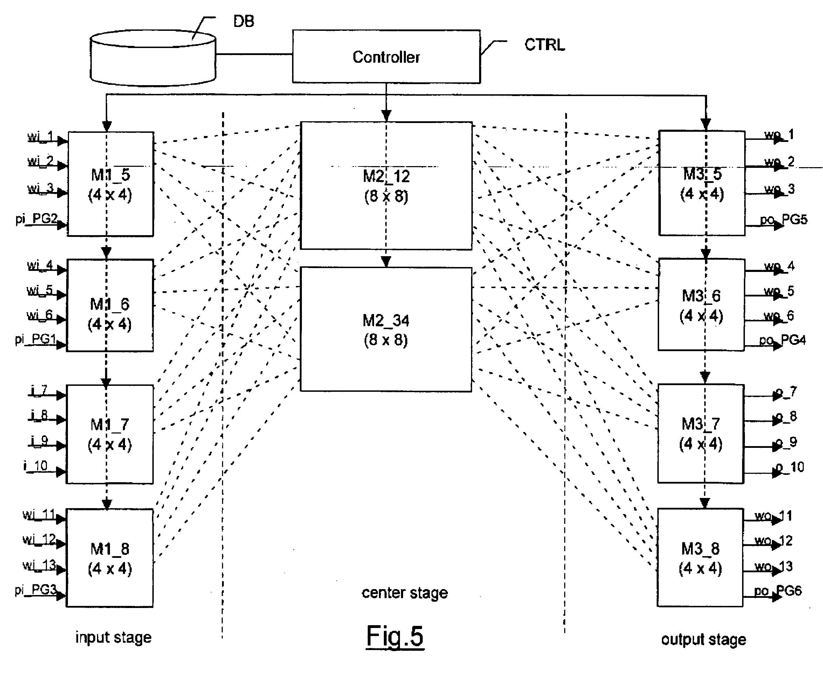

Figure 5 shows a block diagram of a network element of the first embodiment. It has a switching network with four input stage switching matrices M1_5, M1_6, M1_7, M1_8, two center stage switching matrices M2_12, M2_34, and four output stage switching matrices M3_5, M3_6, M3_7, M3_8. The input and output stage matrices are square matrices with a size of 4x4 and the center stage matrices are of size 8x8. Each input stage matrix and each output stage matrix is physically connected via two connection to each center stage matrix. A controller CTRL controls and configures the switch matrices. The controller CTRL is connected to a database, in which he stores the configuration, i.e. the cross-connection map of the switching matrices and makes these persistent against system crashes. The physical connections between the various switching matrices are implemented via backplane while the matrices are implemented on different plug-in cards or boards. For example, the input and output stage matrices can be implemented on I/O boards carrying also the input and output port circuits and the center stage matrices can be implemented on matrix boards.

It should be understood that the shown embodiment is a simplification well suited to explain the concepts and operation of the present invention. Real systems however can have and typically will have a much larger number of inputs and outputs and of matrix modules and the matrix modules can have a much larger size. An example for the dimensioning of a real system will be given below.

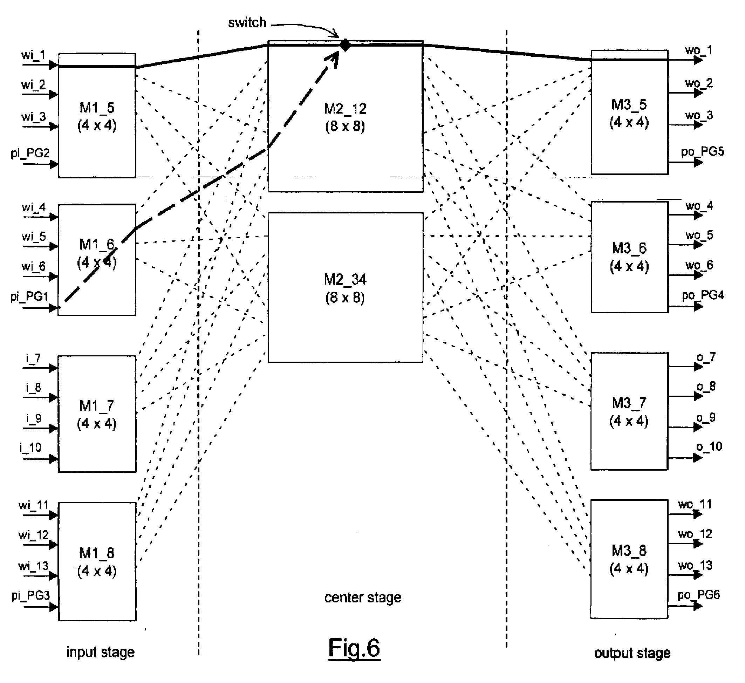

Referring to Fig.6, it shows the configuration of a cross-connectjon through the switching network of figure 5. In particular, it shows the allocation of the cross-connections required for protecting the working input wi_1 with the protection input pi_PG1 over a three-stages switching network. Fig.6 shows, for the sake of simplicity, only the cross-connections allocated between wi_1 and wo_1 (bold line) and between pi_PG1 and wo_1 (broken line) and it does not shows all other cross-connections of Fig.2.

The protection input pi_PG1 is connected to the switching matrix M1_6. different from the switching matrix M1_5 connected to the working input wi_1. such that a failure does not affect both the working input wi_1 and the protection input pi_PG1. More in general, also the working inputs wi_2 and wi_3 are connected to switching matrices of the first stage different from the switching matrix connected to the protection input pi_PG1, that is wi_1 is connected to M1_5 pi_PG1 is connected to M1_6, wi_2 is connected to M1_7 and wi_3 is connected to M1_8; for example, wi_1, wi_2, wi_3 and pi_PG1 are different working and protection input ports, wherein one working input port can fail and it is protected by a different protection input port.

According to the invention, the switch for the protection of the working input wi_1 is performed within a switching matrix M2_12 of the second stage. This allocation allows to have an expansion of 1 between the first and the second stage and between the second and the third stage and also to avoid to re-arrange the configured cross-connections. Therefore only one link (indicated with a thick line from M2_12 to M3_5) is required between the second and the third stage in order to perform the protection of the working input wi_1 with the protection input pi_PG1 (while two links are required between the second and the third stage of a switching system according to the Clos architecture, see Fig.1). Therefore the expansion factor between the second and the third stage of Fig.5 is 1 (while the expansion factor is 2 in prior art Clos arrangement shown Fig.1) and no re-arrangement of the configured cross-connections is required.

Fig.6 only shows that the selection (switch) of wo_1 between wi_1 or pi_PG1 is performed into the switching matrix M2_12, but M2_12 is a single switching matrix which is also adapted to perform the other cross-connections (not shown in Fig.6) required between the correlated protection groups PG1, PG2, PG4, PG5 (see Fig.2), that is M2_12 is also adapted to perform the selection of wo-2 between wi_4 or pi_PG2, the selection of wo_4 between wi_2 or pi_PG1, the bridge (bi-cast) of wi_1 over wo_1 and po_PG4, the bridge (bi-cast) of wi_2 over wo_4 and po_PG5, the bridge (bi-cast) of wi_4 over wo_2 and po_PG4, the bridge (bi-cast) of pi_PG1 over wo_1 and po_PG4, the bridge (bi-cast) of pi_PG1 over wo_4 and po_PG5 and the bridge (bi-cast) of pi_PG2 over wo_2 and po_PG4.

Comparing Fig.1 respect to Fig.6, the switching matrices M2_1 and M2_2 of Fig.1 are merged into one switching matrix M2_12. of Fig.5, wherein the number of M2_12 inputs is equal to the sum of the number of M2_1 inputs and the number of M2_2 inputs (and the number of M2_12 outputs is equal to the sum of the number of M2_1 outputs and the number of M2_2 outputs), but wherein the cross-connection capability of M2_12 is greater than the sum of the cross-connection capability of M2_1 and M2_2, because any M2_12 input can be connected to any M2_12 output. In other words, M2_1 and M2_2 include 4 inputs and 4 outputs: M2_12 includes 8 inputs and 8 outputs, wherein 4 M2_1 inputs are mapped over the first 4 M2_12 inputs, 4 M2_2 inputs are mapped over the second 4 M2_12 inputs, 4 M2_1 outputs are mapped over the first 4 M2_12 outputs and 4 M2_2 outputs are mapped over the second 4 M2_12 outputs. In this example, the first 4 M2_12 inputs can be connected to the first 4 M2_12 outputs (like the cross-connections between the 4 inputs and the 4 outputs of M2_1), but the first 4 M2_12 inputs can also be connected to the second 4 M2_12 outputs (while it is not possible to connect M2_1 inputs to M2_2 outputs) and the second 4 M2_12 inputs can also be connected to the first 4 M2_12 outputs (this last cross-connection is performed by the switch shown in Fig.6).

The merge of matrices of the second switching stage (of a switching system according to the Clos architecture) into a single switching matrix is indicated with "cluster" of the matrices of the second stage. Preferably, M2_12 has a cross-connection capability (8 x 8) which is also greater than the cross-connection capability (4 x 4) of the switching matrix (M1_5) of the first stage connected to the working inputs (wi_1, wi_2, wi_3). Preferably, M2_12 has a cross-connection capability (8 x 8) which is also greater than the cross-connection capability of the switching matrix (M1_6) of the first stage connected to the protection input (pi_PG6).

Similar considerations applies to the switching matrices M2_3 and M2_4 of Fig.1, which are merged into matrix M2_34 of Fig.6. Switching matrices M2_5, M2_6, M2_7 of Fig.1 don not have a corresponding matrix in Fig.6.

According to the invention, the cross-connections between the correlated input and output of protection groups (or between the inputs and the correlated output protection groups, or between the input protection groups and the correlated output protection groups) are allocated over a single switching matrix of a switching system. Referring to Fig.6, PG1, PG2, PG4, PG5 are correlated each other and i7, o_7, PG3, PG6 are correlated each other. Therefore the cross-connections between the working and protection inputs of PG1 and PG2 and the working and protection outputs of PG4 and PG5 are allocated over the switching matrix M2_12, while the cross-connections between i_7, the working and protection inputs of PG3 and o_7, the working and protection outputs of PG6 are allocated over the switching matrix M2_34.

Preferably, the switching system further includes unicast cross-connections between the inputs and the outputs which are not correlated to any input protections group and to any output protection group (for example, Fig.2 shows that i_8 is connected to o_9). In this case, the unicast connections are configured over the switching system after the allocation of the cross-connections of the correlated protection groups, by using the available switching matrices of the switching system and (in case of a 3 stages switching system) by using the available links between the first and second stage and between the second and the third stage. Preferably, the configuration of the unicast cross-connections and potentially also multicast cross-connections not originated from a correlated protection group are performed such that:
- the number of links configured (i.e., the sum among unicast, multicast not originated from correlated protection group, and the ones originated from correlated protection groups) from the first (and third) stage to the multiple switching matrices of the second stage is balanced, that is the number of configured links connected to each of the switching matrices is similar to the number of configured links connected to the other switching matrices; and
- the number of used cross-points of the multiple switching matrices of the second stage is balanced, that is the number of used cross-points of each switching matrix is similar to the number of used cross-points of the other switching matrices.

The balancing is referred to the use of existing links from unicast flows. Such unicast flows, thanks to the fact that, differently from correlated protection groups, have no mutual relationships, will be "spread' across different central stages so to avoid blocking. This has the advantage that, in case of configuring new cross-connection across the switching system or in case of changing the configuration of the cross-connections, the probability that re-arrangement of the configured connections would become necessary is minimized.

Preferably, the second stage of the switching system according to the first embodiment of the invention further includes one additional switching matrix (M2_56, not shown in Fig.6) or more than one switching matrix, that is the expansion factor between the first and the second stage (and between the second and the third stage) is greater than one but smaller than 2. This has the advantage that, in case of configuring a new cross-connection across the switching system or in case of changing the configuration of the cross-connections, the probability that a blocking situation occurs (that is, an unused input cannot be connected to an unused output) and the probability to require the re-arrangement of the configured cross-connections between the working and protection inputs and the working and protection outputs is minimized, because more links are available between the first and the second stage and between the second and the third stage. Therefore a new cross-connection between an available working input and an available working output is configured across the switching system by using the additional switching matrix (M2_56), without re-arranging the allocated cross-connections (over M2_12 and M2_34) when the new cross-connection is configured. Afterwards, the allocated and configured cross-connections can be re-arranged during a longer time period, in order to recover the balancing of the used links between the first (and third) stage and the second stage and the balancing of the used cross-points of the switching matrices of the second stage. This avoids that blocking situations occur after the configuration of several new cross-connections and thus it avoids that the re-arrangement is required when configuring a new cross-connection. This is particularly useful in case of restoration paths which, by their nature, cannot be allocated in advance.

In the following, a comparison is made between a conventional Clos network and the switching network according to the invention. A three stage Clos network has r input matrices with a capacity of n x m, m center stage matrices with a capacity of r x r and r output stage matrices with a capacity of m x n. The Clos theorem says that this three-stage Clos network v(m, n, r) is non-blocking in the strict sense if and only if m ≥ 2n-1. This number is known as the expansion factor, because it defines the "overcapacity" that needs to be provided in the center stage to cope with all possible matrix configurations. As can be observed, the capacity r x r of the center stage modules equals the number of input and output stage matrices, so that each input and output stage matrix can be connected to each center stage matrix. This leads to a minimum number of necessary crosspoints in the network but increases the number of physical interconnections between the individual matrices.

The invention on the other hand, increases the capacity of the center stage matrices and hence the number of required crosspoints, but benefits on the other hand from a reduced expansion factor, which also leads to a reduction of physical matrix interconnections. This is favorable because matrices with higher capacity can be easily designed with today's integrated circuit technology (e.g., in CMOS) but backplanes with large number of interconnections operating at very high signal rate are difficult and costly to manufacture. In the above described example, the capacity of the center stage matrices equals twice the number of input and output stages, so that each input and each output stage matrix is connected to each center stage matrix via two physical interconnections. Many other configurations are, however, also possible. As can be observed, the higher the capacity of the center stage matrices, the lower the number of necessary center stage matrices.

Generally, the increase of capacity and number of cross-points of the central stages depends on the type of protection groups (e.g. 1:1 or shared protection 1:N), of the maximum size of a protection group (e.g. value of N), and the correlations between the protection groups (how many PG are correlated to each other). As a general rule, we can say that the capacity in the center stage according to the invention will be larger than in known Clos arrangements. Considering SDH technology to give an example, the maximum size of a protection group is 14:1, where the protection channel additional can be used to carry low priority traffic. For this case, it can easily be shown that the largest group of correlated protection groups has the size of 225 x 225. The size of each center stage matrix can hence be chosen greater than 225 x 255, to be on the safe side.

The above example deals with only a static case, in which connections are permanently switched in space. However, the general case may include also time-division multiplexed signals, i.e. multiplex signals which carry timeslots with tributary signals. The present invention is equally applicable to such scenario, in that the switching system is configured at each timeslot. For let say N timeslots, the switch system will be configured N times. Logically, this can be seen as a set of N different parallel switch networks of the type described above.

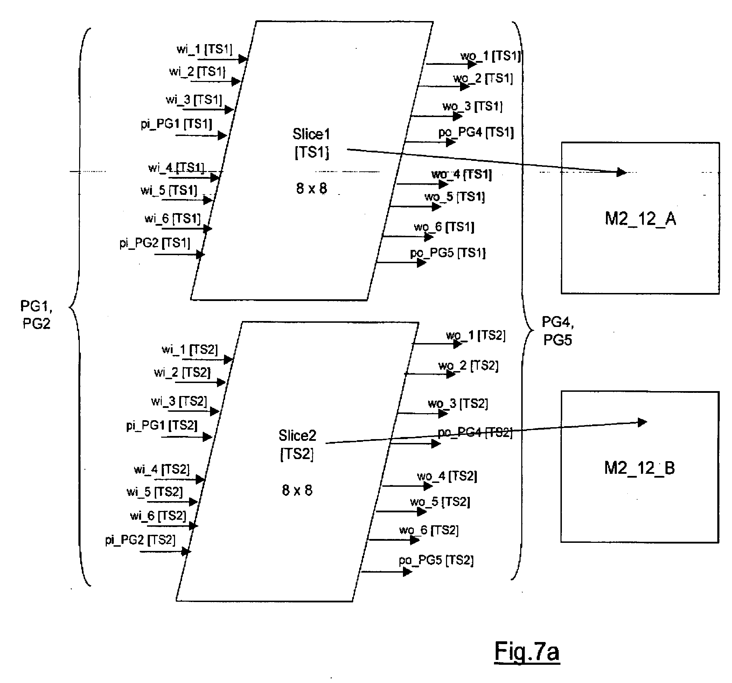

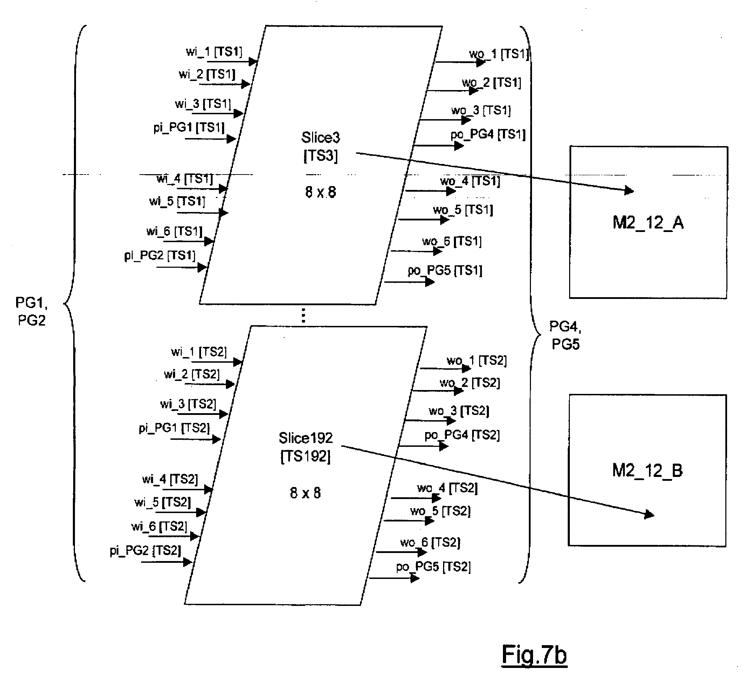

Anyway, in the general case of time-division multiplexed signals, it may be necessary to connect a particular timeslot of an incoming signal, let say timeslot x, to a particular but different timeslot of an outgoing signals, let say timeslot y. In such case, timeslot interchanging would become necessary. According to a preferred aspect of the present invention, this timeslot interchanging takes place in either an input stage switching matrix or an output stage switching matrix or even in both the input stage and the output stage switching matrix. In doing so, it can be assured that all timeslots of a particular protection group lead over a single central switching matrix simultaneously. An example will be described below in a second embodiment shown in figures 7a and 7b.

In the embodiment of Fig.7a and 7b, the inputs and the outputs are carrying a Time Division Multiplex signals including multiple timeslots. More specifically, the signal carries 192 STS-1 frames according to the SONET standard. Therefore each input (and output) of the switching system carries 192 timeslots.

According to the second embodiment of the invention, the timeslots are not changed from an input to an output of the switching system (referring for example to Fig.2, a signal carried over timeslot number 5 of working input wi_4 is carried over timeslot number 5 of working output wo_2) and this allows to divide the correlated protection groups into a number of independent "slices" equal to the number of the timeslots, wherein each slice is a logical switching matrix for performing the cross-connections required between one timeslot of the working and protections inputs and one (same) timeslot of the working and protection outputs of the correlated protection groups. Moreover, each timeslot is allocated over one of the switching matrices of the switching system: for example, different timeslots are allocated over different switching matrices of the second stage of the 3 stage switching system.

Referring to Fig.7a and 7b, it shows 192 timeslots (indicated with Slice1, Slice2, Slice3, ... Slice192) generated from inputs and outputs (of PG1, PG2, PG4, PG5) carrying 192 STS-1 frames, wherein each slice is a logical switching matrix for cross-connecting one timeslot (indicated with TS1, TS2, ... TS192) of all the working and protection inputs and the working and protection outputs of the correlated protection groups PG1, PG2, PG4, PG5. Fig.7a and 7b further shows one example of the allocation of the timeslots over 2 switching matrixes (indicated with M2_12_A and M2_12_B) of the second stage of a 3 stage switching system, wherein the timeslots are alternatively allocated over the first or over the second switching matrix: Slice1 is allocated over M2_12_A, Slice2 is allocated over M2_12_B Slice3 is allocated over M2_12_A, ... Slice192 is allocated over M2_12_B. Anyway, different rules can be used for allocating the timeslots over a plurality of switching matrices of a 3 stages switching system, such that the cross-connections of each timeslot are allocated by crossing a single switching matrix of the second stage.

Preferably, the plurality of timeslots are allocated over multiple switching matrices of a three stages switching system, by:
- balancing the usage of links in terms of configured timeslots per link (including timeslots for correlated protection group signals, multicast and unicast signals) from the first (and third) stage to the multiple switching matrices of second stage, that is the number of configured timeslots per link of links connected to each of the multiple switching matrices is similar to the number of configured timeslots per link of links connected to the other switching matrices; and
- balancing the number of used cross-points of the multiple switching matrices of the second stage, that is then number of used cross-points of each switching matrix is similar to the number of used cross-points of the other switching matrices.

With the introduction of timeslots the objective of mapping is to balance the number of used time-slots per link. In general to balance the filling of links is more important than to balance the used cross-points to avoid blocking. The first policy of balancing the links, will imply the second policy or balancing the cross-points per central stage, while the opposite is not true.

Note: if we add unicast cross-connections, the preferred balancing policy is to map correlate protection group slices first and since this can result in a unbalanced situation (because the cardinality of slices can be different) to use unicasts to balance the gaps.

The preferred mapping policy is the following:
1) balance "slices" of correlated protection groups first;
2) balance "slices" of multicast signals (ie, traffic multicasts not deriving form protection);
3) then balance single unicast timeslots.

Step 1) and 2) can be merged.

Note that from step 1) and 2) may originate a system status where both the links load and central stages cross-points usage is not balanced; this can happen since cardinality of mapped slices both originated from multicast and protection groups signals may be different. Thus unicast signals are used to balance the unbalance that may be present after steps 1) and 2).

The above described balancing method has the advantage that, in case of configuring a new cross-connection across the switching system or in case of changing the configuration of the cross-connections, the probability that a blocking situation occurs (that is, an unused input cannot be connected to an unused output) and the probability to require the re-arrangement of the configured connections is minimized.

As an improvement of the above embodiment, the speed-up can be increased, which is highly beneficial for applications such as restoration which, by its nature, cannot be pre-allocated. This can be achieved in two different manners: 1) by increasing the number of links connecting each 1st and 3rd stage to each central stage; 2) or by increasing the number of timeslots per link in each link; for instance from 192 to 240.

The speed-up put at disposal allows for extra connectivity capability that can be used instantaneously for allocating new connections that cannot be planned in advance like the ones implied from restoration.

The allocation of channels using extra bandwidth can cause unbalancing. Then over longer time period a rearrangement can be done in the background to restore the balancing. This is highly advantageous since the problem with rearranging is not that it cannot be done but that it cannot be done quickly and thus it is hence incompatible with protection switching and also not preferred for restoration purposes.

According to an advantageous improvement of the invention (not shown in the drawings), the second embodiment is implemented over one (or more) switching matrix of a three stages switching system, wherein the position of a timeslot can be changed between an input and an output, for example for performing the protection of a timeslot carried in a telecommunications network, like the SNCP (Sub-Network Connection Protection) protection of the SDH/SONET standard. The change of a timeslot from an input to an output of the switching system is achieved by performing a change of a timeslot in the first stage and a change of a timeslot in the third stage, or by performing only a change of the timeslot in the first stage, or by performing only a change of the timeslot in the third stage. This allows to allocate the slices corresponding to each timeslot independently each other over switching matrices of the second stage, like explained for the second embodiment.

The method according to the invention can be advantageously implemented on a network element of an optical telecommunications network, the network element including hardware devices like an Application Specific Integrated Circuit (ASIC), a Field Programmable Gate Array (FPGA), an Electrically Programmable Logical Device (EPLD) or a microprocessor.

More specifically, the steps of identification of the correlation, of identification of the cross-connections required across the switching system and of allocation of the required cross-connections are implemented through a software program (written for example in C language) running on a microprocessor (external or embedded into an FPGA) in the network element.

The network element includes the switching system according to the invention, wherein the switching system can be implemented over one board or over a plurality of boards interconnected (at least in part) to each other.

In the following, an example if given of the dimensioning of an actual system:
The main input parameters (system features) are:
   - Nₚ: number of ports, e.g. 256
   - N_{p.c}: port capacity, e.g. 10G
   - N_{p.ch}: number of channels per port, e.g. 192 (STS-1 granularity)
Parameters, which depend on the dimensioning choices and are subject to technical constraints:
   - N_{cs}: number of logical central stage matrices
   - N_{cs.cn}: number of channels switched from each central stage N_{cs.ch.is}: number of switch fabric chip ports
   - N_{sf}: number of switch fabrics per central stage matrix
   - N_{sf.p}: number of switch fabric chip ports
   - N_{sf.c(p)}: switch fabric chip port capacity
   - N_{sf:ch(p)}: number of channels supported from switching chip per port
   - Nᵢₛ, Nₒₛ: number of input stage matrices (IS) and output stage matrices (OS).

A favorable design choice, that represents a preferred implementation of the present invention, would be the following:
- number of ports Nₚ: 256
- port capacity N_{p.c}: 10G
- number of channels per port N_{p.ch}: 192
- number of central stage matrices N_{cs}: 4
- number of channels switched from each central stage N_{cs.ch}: 12228
- number of switch fabric chip ports N_{cs.ch.is}: 192
- number of switch fabric chips per central stage matrix N_{sf}: 4
- number of switch fabric chip ports N_{sf.p}: 64
- switch fabric chip port capacity N_{sf.c(p)}: 2,5G
- number of channels supported from switching chip per port N_{sf.ch(p)}: 192
- number of input and output stage matrices Nᵢₛ, Nₒₛ: 64

## Claims

1. A method of establishing cross-connections through a multi-stage switching system comprising multiple input switching matrices (M1_5, M1_6, M1_7, M1_8) physically connected via multiple central switching matrices (M2_12, M2_34) to multiple output switching matrices (M3_5, M3_6, M3_7, M3_8); said method comprising the step of:
- identifying protection groups (PG1-PG6) including input protection groups (PG1-PG3) having a protection input (pi_PG1, pi_PG2, pi_PG3) assigned to one or more working inputs (wi1-wi13) and output protection groups (PG4-PG6) having a protection output (po_PG4, po_PG5, po_PG6) assigned to one or more working outputs (wo1-wo13);
**characterized by** the steps of:
- determining correlations between said protection groups (PG1-PG6), wherein at least one working input of a first protection group is to be cross-connected to at least one working output of a second protection group;
- configuring the switching matrices of said switching system to establish said cross-connections such that all cross-connections of mutually correlated protection groups (PG1, PG2, PG4, PG5) lead over a single one of said central switching matrices (M2_12).

2. A method according to claim 1, wherein an input protection group contains for each working input a switch connection to select between either the working input or the related protection input in the case of a failure and wherein this switch connection is configured in the central switch matrix.

3. A method according to claim 1, wherein an output protection group contains for each working output a bridge connection for copying traffic destined for the working output to the related protection output in the case of a failure and wherein this bridge connection is configured in the central switch matrix.

4. A method according to claim 1, comprising the steps of:
- first allocating the cross-connections of said correlated protection groups and
- then configuring additional unicast cross-connections; thereby balancing the number of links configured from the input switching matrices to the central switching matrices and the number of links configured from the output switching matrices to the central switching matrices, and balancing the number of used cross-points of the central switching matrices.

5. A method according to claim 1, wherein the multi-stage switching system is adapted for time division multiplex signals having multiple timeslots, the method further comprising the steps of:
- interchanging timeslots at the input switching matrices and/or at the output switching matrices to establish cross-connections between different timeslots; and
- configuring the switching matrices of said switching system for each of said timeslots to establish said cross-connections such that all cross-connections of mutually correlated protection groups (PG1, PG2, PG4, PG5) lead over a single central switching matrix (M2_12) simultaneously.

6. A method according to claim 1, wherein the multiple working inputs are connected to different input switching matrices and wherein the multiple working outputs are connected to different output switching matrices.

7. A network element for a transport network comprising a multi-stage switching system comprising multiple input switching matrices (M1_5, M1_6, M1_7, M1_8) physically connected via multiple central switching matrices (M2_12, M2_34) to multiple output switching matrices (M3_5, M3_6, M3_7, M3_8); and control means for configuring said switching system to establishing cross-connections between inputs and outputs of said switching system; wherein said control means are adapted
- to identify protection groups (PG1-PG6) including input protection groups (PG1-PG3) having a protection input (pi_PG1, pi_PG2, pi_PG3) assigned to one or more working inputs (wi1-wi13) and output protection groups (PG4-PG6) having a protection output (po_PG4, po_PG5, po_PG6) assigned to one or more working outputs (wo1-wo13);
**characterized in that** said control means are further adapted
- to determine correlations between said protection groups (PG1-PG6), wherein at least one working input of a first protection group is to be cross-connected to at least one working output of a second protection group; and
- to configure the switching matrices of said switching system to establish said cross-connections such that all cross-connections of mutually correlated protection groups (PG1, PG2, PG4, PG5) lead over a single one of said central switching matrices (M2_12).

8. A network element to claim 7, wherein an input protection group contains for each working input a switch connection to select between either the working input or the corresponding protection input in the case of a failure, wherein the central switching matrices are capable to perform this switch connection.

9. A network element to claim 7, wherein an output protection group contains for each working output a bridge connection for selectively copying traffic destined for the working output to the corresponding protection output in the case of a failure and wherein the central switch matrices are capable to perform this bridge connection.

10. A network element to claim 7, wherein the multi-stage switching system is adapted for time division multiplex signals having multiple timeslots, and wherein the input switching matrices and/or at the output switching matrices comprise timeslot interchangers to establish cross-connections between different timeslots.

11. A network element to claim 7, wherein the central switching matrices have a higher switching capacity than center stage switching matrixes in accordance with the Clos theorem.

## Patentansprüche

1. Verfahren zur Herstellung von Querverbindungen durch ein mehrstufiges Schaltsystem, welches mit mehrfachen Eingängen versehene Schaltmatrizen (M1_5, M1_6, M1_7, M1_8) umfasst, die physisch über mehrfache zentrale Schaltmatrizen (M2_12, M2_34) mit Schaltmatrizen (M3_5, M3_6, M3_7, M3_8) mit mehrfachen Ausgängen verbunden sind; wobei das besagte Verfahren die folgenden Schritte umfasst:
- Identifizieren von Schutzgruppen (PG1-PG6), umfassend Eingangsschutzgruppen (PG1-PG3) mit einem Schutzeingang (pi_PG1, pi_PG2, pi_PG3), welcher einem oder mehreren Arbeitseingängen (wi1-wi13) zugeteilt ist, und Ausgangsschutzgruppen (PG4-PG6) mit einem Schutzausgang (po_PG4, po_PG5, po_PG6), welcher einem oder mehreren Arbeitsausgängen (wo1-wo13) zugeteilt ist;
**gekennzeichnet durch** die folgenden Schritte:
- Ermitteln von Korrelationen zwischen den besagten Schutzgruppen (PG1-PG6), wobei mindestens ein Arbeitseingang einer ersten Schutzgruppe mit mindestens einem Arbeitsausgang einer zweiten Schutzgruppe querverbunden werden muss;
- Konfigurieren der Schaltmatrizen des besagten Schaltsystems, um die besagten Querverbindungen herzustellen, so dass alle Querverbindungen von jeweils korrelierten Schutzgruppen (PG1, PG2, PG4, PG5) über eine einzige der besagten zentralen Schaltmatrizen (M2_12) führen.

2. Verfahren nach Anspruch 1, wobei eine Eingangsschutzgruppe für jeden Arbeitseingang eine Schaltverbindung umfasst, um im Fall einer Störung zwischen entweder dem Arbeitseingang oder dem zugehörigen Schutzeingang zu wählen, und wobei diese Schaltverbindung in der zentralen Schaltmatrix konfiguriert wird.

3. Verfahren nach Anspruch 1, wobei eine Ausgangsschutzgruppe für jeden Arbeitsausgang eine Brückenverbindung umfasst, um im Fall einer Störung den für den Arbeitsausgang bestimmten Verkehr auf den zugehörigen Schutzausgang zu kopieren, und wobei diese Brückenverbindung in der zentralen Schaltmatrix konfiguriert wird.

4. Verfahren nach Anspruch 1, die folgenden Schritte umfassend:
- Erstens das Zuordnen der Querverbindungen der besagten korrelierten Schutzgruppen, und
- anschließend das Konfigurieren von zusätzlichen Unicast-Querverbindungen, wodurch die Anzahl der konfigurierten Links von den Eingangsschaltmatrizen auf die zentralen Schaltmatrizen und die Anzahl der konfigurierten Links von den Ausgangsschaltmatrizen auf die zentralen Schaltmatrizen abgestimmt wird und die Anzahl der benutzten Kreuzungspunkte der zentralen Schaltmatrizen abgestimmt wird.

5. Verfahren nach Anspruch 1, wobei das mehrstufige Schaltsystem für Zeitmultiplexsignale mit mehrfachen Zeitschlitzen ausgelegt ist, wobei das Verfahren weiterhin die folgenden Schritte umfasst:
- Austauschen von Zeitschlitzen an den Eingangsschaltmatrizen und/oder an den Ausgangsschaltmatrizen, um Querverbindungen zwischen verschiedenen Zeitschlitzen herzustellen; und
- Konfigurieren der Schaltmatrizen des besagten Schaltsystems für einen jeden der besagten Zeitschlitze, um die besagten Querverbindungen herzustellen, so dass alle Querverbindungen der jeweils korrelierten Schutzgruppen (PG1, PG2, PG4, PG5) gleichzeitig über eine einzige zentrale Schaltmatrix (M2_12) führen.

6. Verfahren nach Anspruch 1, wobei die mehrfachen Arbeitseingänge mit verschiedenen Eingangsschaltmatrizen verbunden sind, und wobei die mehrfachen Arbeitsausgänge mit verschiedenen Ausgangsschaltmatrizen verbunden sind.

7. Netzwerkelement für ein Transportnetzwerk mit einem mehrstufigen Schaltsystem, welches mehrfache Eingangsschaltmatrizen (M1_5, M1_6, M1_7, M1_8) umfasst, die physisch über mehrfache zentrale Schaltmatrizen (M2_12, M2_34) mit mehrfachen Ausgangsschaltmatrizen (M3_5, M3_6, M3_7, M3_8) verbunden sind; und Steuermittel zum Konfigurieren des besagten Schaltsystems, um Querverbindungen zwischen Eingängen und Ausgängen des besagten Schaltsystems herzustellen; wobei die besagten Steuermittel ausgelegt sind für die
- Identifizierung von Schutzgruppen (PG1-PG6), umfassend Eingangsschutzgruppen (PG1-PG3) mit einem Schutzeingang (pi_PG1, pi_PG2, pi_PG3), welcher einem oder mehreren Arbeitseingängen (wi1-wi13) zugeteilt ist, und Ausgangsschutzgruppen (PG4-PG6) mit einem Schutzausgang (po_PG4, po_PG5, po_PG6), welcher einem oder mehreren Arbeitsausgängen (wo1-wo13) zugeteilt ist;
**dadurch gekennzeichnet, dass** die besagten Steuermittel weiterhin ausgelegt sind für die
- Ermittlung von Korrelationen zwischen den besagten Schutzgruppen (PG1-PG6), wobei mindestens ein Arbeitseingang einer ersten Schutzgruppe mit mindestens einem Arbeitsausgang einer zweiten Schutzgruppe querverbunden werden muss;
- Konfiguration der Schaltmatrizen des besagten Schaltsystems, um die besagten Querverbindungen herzustellen, so dass alle Querverbindungen von jeweils korrelierten Schutzgruppen (PG1, PG2, PG4, PG5) über eine einzige der besagten zentralen Schaltmatrizen (M2_12) führen.

8. Netzwerkelement nach Anspruch 7, wobei eine Eingangsschutzgruppe für jeden Arbeitseingang eine Schaltverbindung umfasst, um im Fall einer Störung zwischen entweder dem Arbeitseingang oder dem entsprechenden Schutzeingang zu wählen, wobei die zentralen Schaltmatrizen für das Ausführen dieser Querverbindung ausgelegt sind.

9. Netzwerkelement nach Anspruch 7, wobei eine Ausgangsschutzgruppe für jeden Arbeitsausgang eine Brückenverbindung umfasst, um im Fall einer Störung den für den Arbeitsausgang bestimmten Verkehr auf den zugehörigen Schutzausgang zu kopieren, und wobei die zentralen Schaltmatrizen für das Ausführen dieser Brückenverbindung ausgelegt sind.

10. Netzwerkelement nach Anspruch 7, wobei das mehrstufige Schaltsystem für Zeitmultiplexsignale mit mehrfachen Zeitschlitzen ausgelegt ist, und wobei die Eingangsschaltmatrizen und/oder die Ausgangsschaltmatrizen Zeitschlitz-Austauscher umfassen, um Querverbindungen zwischen verschiedenen Zeitschlitzen herzustellen.

11. Netzwerkelement nach Anspruch 7, wobei die zentralen Schaltmatrizen eine höhere Schaltleistung als Mittelstufen-Schaltmatrizen gemäß dem Clos-Theorem aufweisen.

## Revendications

1. Procédé pour établir des connexions croisées à travers un système de commutation à étages multiples comprenant de multiples matrices de commutation d'entrée (M1_5, M1_6, M1_7, M1_8) reliées physiquement par le biais de multiples matrices de commutation centrales (M2_12, M2_34) à de multiples matrices de commutation de sortie (M3_5, M3_6, M3_7, M3_8) ; ledit procédé comprenant l'étape suivante :
- Identification de groupes de protection (PG1-PG6) incluant des groupes de protection d'entrée (PG1-PG3) munis d'une entrée de protection (pi_PG1, pi_PG2, pi_PG3) affectée à une ou plusieurs entrées de travail (wi1-wi13) et des groupes de protection de sortie (PG4-PG6) munis d'une sortie de protection (po_PG4, po_PG5, po_PG6) affectée à une ou plusieurs sorties de travail (wo1-wo13) ;
**caractérisé par** les étapes suivantes :
- Détermination des corrélations entre lesdits groupes de protection (PG1-PG6), au moins une entrée de travail d'un premier groupe de protection devant être connectée en croix avec au moins une sortie de travail d'un deuxième groupe de protection ;
- Configuration des matrices de commutation dudit système de commutation pour établir lesdites connexions croisées de telle sorte que toutes les connexions croisées des groupes de protection (PG1, PG2, PG4, PG5) mutuellement corrélés passent par une seule desdites matrices de commutation centrales (M2_12).

2. Procédé selon la revendication 1, dans lequel un groupe de protection d'entrée contient pour chaque entrée de travail une connexion de commutation pour choisir entre soit l'entrée de travail, soit l'entrée de protection associée dans le cas d'une défaillance, et dans lequel cette connexion de commutation est configurée dans la matrice de commutation centrale.

3. Procédé selon la revendication 1, dans lequel un groupe de protection de sortie contient pour chaque sortie de travail une connexion en pont pour copier le trafic destiné à la sortie de travail sur la sortie de protection associée dans le cas d'une défaillance, et dans lequel cette connexion en pont est configurée dans la matrice de commutation centrale.

4. Procédé selon la revendication 1, comprenant les étapes suivantes :
- premièrement, Attribution des connexions croisées desdits groupes de protection corrélés, et
- ensuite, Configuration de connexions croisées de monodiffusion supplémentaires ; équilibrant ainsi le nombre de liaison configurées des matrices de commutation d'entrée vers les matrices de commutation centrales et le nombre de liaisons configurées des matrices de commutation de sortie vers les matrices de commutation centrales et équilibrant le nombre de points d'intersection utilisés des matrices de commutation centrales.

5. Procédé selon la revendication 1, dans lequel le système de commutation à étages multiples est adapté pour des signaux multiplexés par répartition dans le temps ayant de multiples créneaux temporels, le procédé comprenant en outre les étapes suivantes :
- Échange mutuel de créneaux temporels au niveau des matrices de commutation d'entrée et/ou des matrices de commutation de sortie pour établir des connexions croisées entre les différents créneaux temporels ; et
- Configuration des matrices de commutation dudit système de commutation pendant chacun desdits créneaux temporels pour établir lesdites connexions croisées de telle sorte que toutes les connexions croisées des groupes de protection (PG1, PG2, PG4, PG5) mutuellement corrélés passent simultanément par une seule matrice de commutation centrale (M2_12).

6. Procédé selon la revendication 1, dans lequel les multiples entrées de travail sont connectées à des matrices de commutation d'entrée différentes et dans lequel les multiples sorties de travail sont connectées à des matrices de commutation de sortie différentes.

7. Élément de réseau pour un réseau de transport comprenant un système de commutation à étages multiples comprenant de multiples matrices de commutation d'entrée (M1_5, M1_6, M1_7, M1_8) reliées physiquement par le biais de multiples matrices de commutation centrales (M2_12, M2_34) à de multiples matrices de commutation de sortie (M3_5, M3_6, M3_7, M3_8) ; et des moyens de commande pour configurer ledit système de commutation pour établir des connexions croisées entre les entrées et les sorties dudit système de commutation ; lesdits moyens de commande étant adaptés
- pour identifier des groupes de protection (PG1-PG6) incluant des groupes de protection d'entrée (PG1-PG3) munis d'une entrée de protection (pi_PG1, pi_PG2, pi_PG3) affectée à une ou plusieurs entrées de travail (wi1-wi13) et des groupes de protection de sortie (PG4-PG6) munis d'une sortie de protection (po_PG4, po_PG5, po_PG6) affectée à une ou plusieurs sorties de travail (wo1-wo13) ;
**caractérisé en ce que** lesdits moyens de commande sont en outre adaptés
- pour déterminer les corrélations entre lesdits groupes de protection (PG1-PG6), au moins une entrée de travail d'un premier groupe de protection devant être connectée en croix avec au moins une sortie de travail d'un deuxième groupe de protection ; et
- pour configurer les matrices de commutation dudit système de commutation pour établir lesdites connexions croisées de telle sorte que toutes les connexions croisées des groupes de protection (PG1, PG2, PG4, PG5) mutuellement corrélés passent par une seule desdites matrices de commutation centrales (M2_12).

8. Élément de réseau selon la revendication 7, dans lequel un groupe de protection d'entrée contient pour chaque entrée de travail une connexion de commutation pour choisir entre soit l'entrée de travail, soit l'entrée de protection associée dans le cas d'une défaillance et dans lequel les matrices de commutation centrales sont capables de réaliser cette connexion de commutation.

9. Élément de réseau selon la revendication 7, dans lequel un groupe de protection de sortie contient pour chaque sortie de travail une connexion en pont pour copier le trafic destiné à la sortie de travail sur la sortie de protection associée dans le cas d'une défaillance et dans lequel les matrices de commutation centrales sont capables de réaliser cette connexion en pont.

10. Élément de réseau selon la revendication 7, dans lequel le système de commutation à étages multiples est adapté pour des signaux multiplexés par répartition dans le temps ayant de multiples créneaux temporels, et dans lequel les matrices de commutation d'entrée et/ou les matrices de commutation de sortie comprennent des dispositifs d'échange mutuel des créneaux temporels pour établir des connexions croisées entre les différents créneaux temporels.

11. Élément de réseau selon la revendication 7, dans lequel les matrices de commutation centrales possèdent une capacité de commutation supérieure à celle des matrices de commutation de l'étage central conformes au théorème de Clos.
